Europäisches Patentamt

**European Patent Office**

Office européen des brevets

(11) Publication number: **0 200 945 B1**

## EUROPEAN PATENT SPECIFICATION

(45) Date of publication of patent specification: **24.07.91**

(21) Application number: **86104941.9**

(22) Date of filing: **10.04.86**

(51) Int. Cl.⁵: **G06K 1/12**, G06K 7/10, G06K 15/00, G06F 3/00, B65C 11/02, G06K 17/00

(54) **Thermal label printer.**

(30) Priority: **26.04.85 JP 89005/85**

(43) Date of publication of application:
**12.11.86 Bulletin 86/46**

(45) Publication of the grant of the patent:
**24.07.91 Bulletin 91/30**

(84) Designated Contracting States:
**DE FR GB**

(56) References cited:
**EP-A- 0 126 898**
**DE-A- 3 413 887**

(73) Proprietor: **Kabushiki Kaisha Sato**
**15-5, 1-chome, Shibuya**
**Shibuya-ku Tokyo(JP)**

(72) Inventor: **Sato, Yo**
**21-23, 3-chome Kamikitazawa Setagaya-ku**
**Tokyo(JP)**

(74) Representative: **Patentanwälte Grünecker,**
**Kinkeldey, Stockmair & Partner**
**Maximilianstrasse 58**
**W-8000 München 22(DE)**

## Description

Field of the Invention

This invention relates to a thermal label printer, and more particularly to a thermal label printer constituted of a label printer unit and a data input unit which can be connected and disconnected as desired.

## DESCRIPTION OF THE PRIOR ART

Conventional thermal printers of the kind known from EP-A-0 126 898 published 05.12.84 are disadvantageous in that when they are used in applications that require the operation for inputting the data to be printed and the operation for printing the labels to be carried out at different places, which is a frequently encountered necessity, the printer section of the device often interferes with the data input operation. More specifically, the data input operation using a thermal label printer of this type is commonly conducted outside of the office, i.e. in the warehouse or in the field, so that the need to carry around the heavy printer as well as the data input unit even in cases where the labels do not have to be printed out immediately, hinders the operator's work.

The conventional devices have also been disadvantageous from the economical point of view, particularly in applications where it is necessary to print out labels of different size (especially of different width), since the printing of different size labels necessitates the use of different print heads and other mechanical elements, making it necessary for the user to purchase two or more different types of printers.

## SUMMARY OF THE INVENTION

An object of the invention is to provide a thermal label printer which is well adapted for use in applications wherein data input and label printing are carried out at different locations or wherein labels of different sizes are to be printed.

The present invention as defined by the claim attains these objects by providing a thermal label printer comprising a data input means such as a pen scanner or keyboard, a data memory means for storing the data from the data input means, and a printer means for printing required data on thermosensitive labels which are separable for attachment to prescribed articles or at prescribed places, the thermal label printer being divided into a label printer unit and a data input unit which can be freely connected or disconnected.

The thermal label printer according to this invention as claimed is thus able to print labels in accordance with the data input thereto and also to improve the efficiency of the data input and label printing operations in cases where these operations are conducted at different places, by enabling the label printer unit and the data input unit to be connected and disconnected as required. Also, by providing a plurality of printer units each adapted for printing labels of a different size, it becomes possible to print labels of the desired size simply by selecting the appropriate one of the printer units and connecting it with the data input unit. In addition, the capability of the thermal label printer can easily be expanded further by the additional provision of function keys for entering commands for different data input and output modes.

## BRIEF DESCRIPTION OF THE DRAWINGS

Figure 1 is a perspective view of an embodiment of the thermal label printer according to this invention,
Figure 2 is a sectional side view of the same embodiment showing its internal structure,
Figure 3 is a perspective view of a segment of a label strip,
Figure 4 is a perspective view of a thermal label printer according to this invention with its data input unit separated from its label printer unit, and
Figure 5 is a perspective view of the thermal label printer shown in Figure 1 with the data input unit and the label printer unit connected at a different angle.

## DESCRIPTION OF THE PREFERRED EMBODIMENT

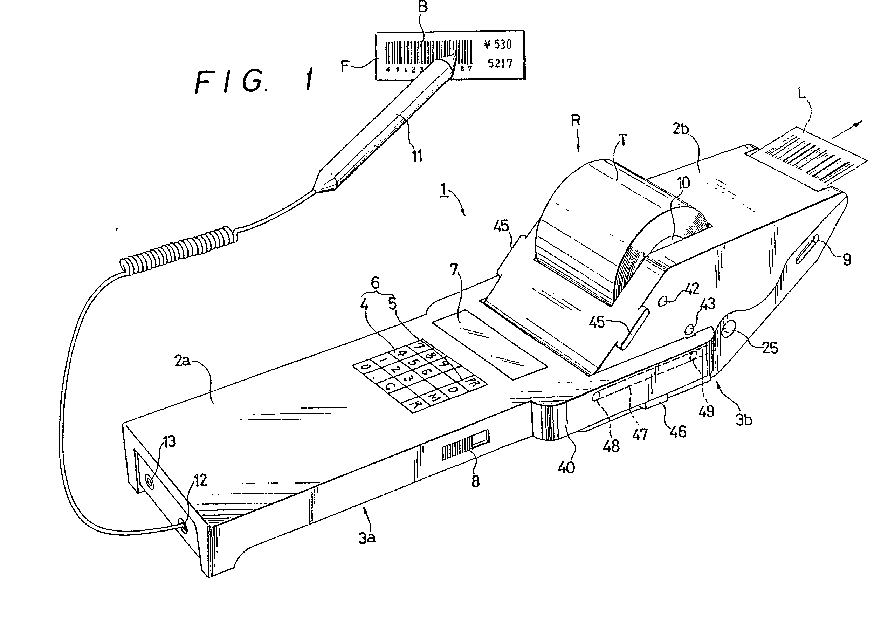

Referring to Figure 1, the thermal label printer 1 according to this invention consists of a data input unit 2a and a label printer unit 2b which combine to form a main unit of desk-top type. The units 2a and 2b have respective flat bottom surfaces 3a and 3b which can be used for supporting the thermal label printer on any desired flat surface.

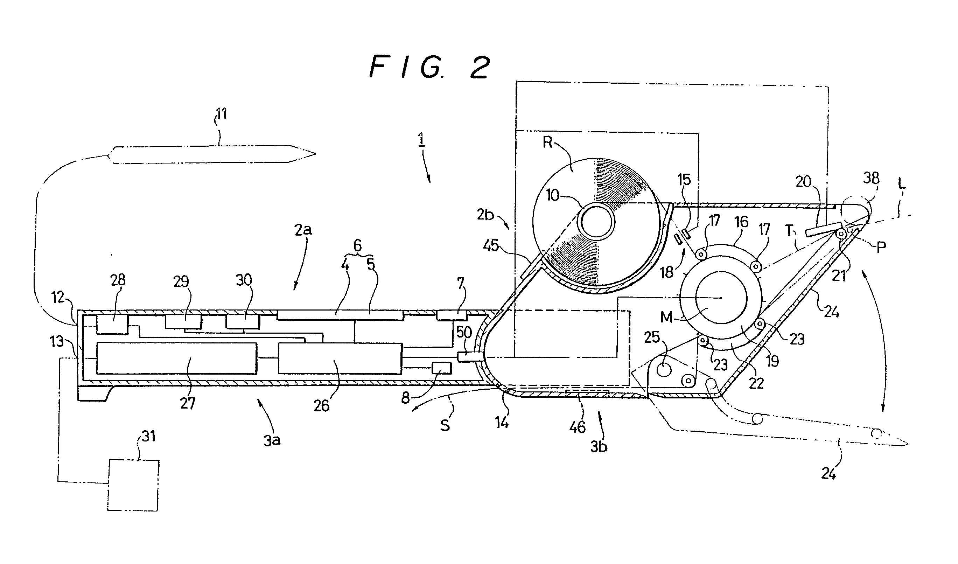

The data input unit 2a is provided on its top side with a keyboard 6 consisting of a numeric pad 4 and a number of function keys 5, and at a position above the keyboard 6 with a data display 7 which may, for example, be a liquid crystal display. One side surface of the data input unit 2a is provided with a power switch 8. The printer unit 2b is provided on either side with an open/close button 9 (only one shown) and on its top side with a support member 10 for holding a thermal label roll R consisting of a thermal label strip T wound into a roll. The thermal label strip T comprises a backing sheet S (Figure 2) bearing numerous labels L which after being printed and detached from the backing sheet S are discharged from the front end of the thermal label printer as indicated by the arrow.

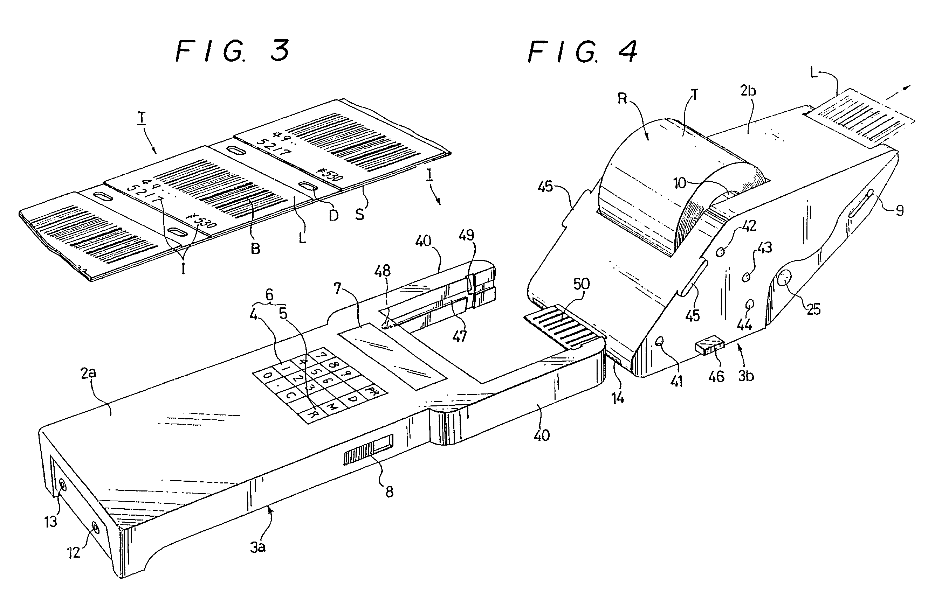

At the rear end of the input unit 2a are provided a socket 12 for connecting a pen scanner 11 and a socket 13 for connecting a battery charger 31 to an internal battery 27 (Figure 2) whose function will be described later. The reference numeral 14 appearing in Figure 2 and Figure 4 denotes a discharge outlet for the backing sheet S which is formed at the rear end of the printer unit 2b near the bottom thereof.

Returning to Figure 1, the pen scanner 11 is passed over a bar code B printed on a shelf tag F and representing a merchandise code or the like, and the data read in this way is input to the thermal label printer 1.

As best shown in Figure 4, the input unit 2a and the printer unit 2b are constituted as separate units which can be united with each other by clamping the printer unit 2b within a yoke 40 provided on the forward end of the input unit 2a. The two units 2a and 2b can be connected and disconnected as desired.

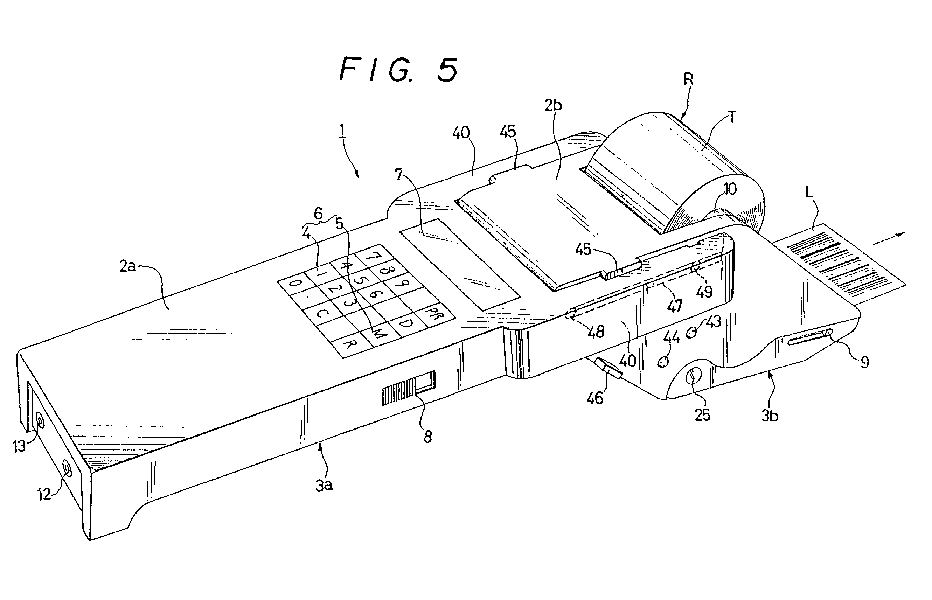

The manner of connection between the two units will now be described in more detail. The unit 2b has a pair of steel balls 41 (only one shown) countersunk one each at symmetrical positions in its left and right side surfaces, similarly provided paired steel balls 42, 43 and 44 (only one of each pair shown) for fixing the angular position between the unit 2a and the unit 2b, a pair of upper position stops 45 and a pair of lower position stops 46 (only one shown). The steel balls 41, 42, 43 and 44 are outwardly urged by associated springs (not shown) so as to normally protrude above the side surface of the unit 2b but to recede under externally applied pressure to a position flush with the side surface. The yoke 40 has a guide groove 47 running along the inside surface of either leg thereof and each of the guide grooves 47 is provided with a pivot hole 41 near the inward end thereof and with an angular position fixing hole 49 near the outward end thereof. When the units are connected, the steel balls 41 pass along the grooves 47 until coming into snap engagement with the pivot holes 48, at which time one of the pairs of steel balls 42, 43, 44 makes snap engagement with the angular position fixing holes 49. Figure 1 shows the case where the angular relation between the units 2a and 2b is such that the yoke 40 is in abutment with the lower position stops 46 and the steel balls 44 are engaged in the angular position fixing holes 49, while Figure 5 shows the case where the angular relation between the units 2a and 2b is such that the yoke 40 is in abutment with the upper position stops 45 and the steel balls 42 are engaged in the angular position fixing holes 49. Reference numeral 50 denotes a connector for electrical connection between the units 2a and 2b.

It should be understood that the mechanism for mechanically connecting the units 2a add 2b in such manner that they can be connected and disconnected as desired and when connected can be varied in angular relation can alternatively be constituted in various other ways than that illustrated, using, for example, screws, cams, leaf springs, linkages and the like.

The internal structure of the thermal printer 1 will now be described with reference to Figure 2. The thermal label strip T is drawn off the thermal label roll supported on the suppport member 10 of the label printer unit 2b and passed along a label strip passage 18 that takes it through a position sensor 15 and along guide rollers 17 of an upper press member 16.

As shown in Figure 3, the thermal label strip T consists of a continuous series of labels L detachably adhered to a continuous backing sheet S. The labels L have adhesive applied to their rear surfaces while the backing sheet S is coated with a parting agent to facilitate separation of the labels L therefrom. The labels L are intended to be printed with information I which may include a bar code B representing a merchandise code or a manufacturer code, a division code and a price. The backing sheet S has holes D for position detection as well as for engagement with the conveyor roller 19 shown in Figure 2.

Reverting to Figure 2, the thermal label strip T passes via the conveyor roller 19 to a thermal print head 20 and a platen 21, is redirected at the platen 21 portion, where the labels L are peeled off, so that just the backing strip is directed back to engagement with the conveyor roller 19, guided by guide rollers 23 of a lower press member 22, and the backing sheet S then feeds out from the unit 2b via the discharge outlet 14. A sheet bending pin P (shown by a phantom line) can be provided in front of the platen 21 as the label peeling means for peeling the labels L from the backing sheet S as the backing sheet S is redirected.

The loading of the label strip T is accomplished by working the open/close buttons 9 to allow the bottom cover 24 section which includes the platen 21 and the lower press member 22, to swing downwardly about pivots 25 (i.e. to the position shown in phantom lines in Figure 1), thereby making it possible to insert the roll of thermal label strip T. Any conventional type of opening/closing mechanism may be used for this purpose, so details thereof are herein omitted. The conveyor roller 19 is driven by the stepped rotation action of a stepping motor M so as to move the thermal label strip T in the required direction for printing and conveyance.

The input unit 2a houses a control circuit 26. This control circuit 26 is connected to a battery 27, an interface 28 for data input from the pen scanner 11, a ROM program memory 29 for communication and control programs, a RAM data memory 30, and a keyboard 6. The display 7, sensor 15, thermal print head 20 and stepping motor M are also connected to the control circuit 26 via the connector 50 and are thereby controlled by the control circuit 26. The battery 27 is a rechargeable type and can be connected via the socket 13 to an external battery charger 31.

The operation of the present invention will now be explained with reference to an application for replenishing stock at a supermarket or the like.

The operator carries the thermal label printer 1 and the pen scanner 11 to a merchandise display shelf or rack where he scans a shelf tag F, thus inputting the merchandise code and other pertinent data to the thermal label printer 1. Next he operates the keys of the numeric pad 4 to input the quantity of merchandise to be ordered to bring the stock up to the desired level. At this time the input data is displayed on the display 7 so that the operator is able to confirm its accuracy. The operator then moves to succeeding shelves or racks and repeats the same operations. In the course of this work the operator may or may not want to print labels with the input data immediately after the data is input. If there is no need to print labels immediately, the operator can detach the printer unit 2b and carry only the input unit 2a. This will reduce the weight of the equipment he has to carry and relieve him of a considerable amount of labor in cases where he is required to continue his work for a relatively long time.

The input data is temporarily stored in the data memory 30 and then, after the work of inputting order data for stock replenishment has been completed, it is possible for the operator to go to the freight receiving area, either immediately or after the ordered merchandise has arrived, and print out the required labels (after reconnecting the input unit 2a with the printer unit 2b, of course, if the two units have been disconnected). For the printing of labels in this way, the operator need only press the function key 5 marked PR. This will cause the conveyor roller 19 to advance the thermal label strip T and activate the thermal head 20, causing it to print the labels L with bar codes B and other information I corresponding to the merchandise codes, order quantity data and the like stored in the memory means 30. Moreover, as only the backing sheet S is redirected at the platen 21, the labels L are peeled off the backing sheet S and ejected from unit 2b. As each label is ejected, the operator can pick it up and affix it to the appropriate item of merchandise (not shown).

Thus the labels can be printed merely by pressing the PR function key, without the troublesome work of manually inputting the merchandise code and quantity data that has conventionally been required. Where the number of labels to be applied to merchandise is large, it will be convenient to provide an application roller 38 forward of the platen 21 as shown by a phantom line in Figure 2. In this case, the work of applying the labels can be carried out with high efficiency by adjusting the angular relation between the units 2a and 2b to that shown in Figure 5 and using the unit 2a portion as a handle.

The structure of the thermal label printer according to this invention can be simplified, if desired, by omitting the keyboard and providing only the pen scanner or a touch scanner as the data input means and further optionally omitting the display as well.

Also, in a case where the thermal label printer according to this invention is desired to be made easily portable, a handle (not shown) can be provided on the bottom of one of the two units 2a and 2b. The handle can be of either fixed or detachable type.

Although the invention has been described with respect to an application for ordering merchandise to replenish stock at a supermarket or the like, the invention is not limited to such an application but can also be used for inputting and outputting data regarding various types of merchandise and other articles using a pen scanner, keyboard or any of various other kinds of data I/O means, as well as for printing labels using the data input thereto from the data I/O means or, optionally, using data input thereto from a central computer. As a result the thermal label printer according to this invention is able to print labels based on various data from various sources, and is therefore applicable to a wide range of jobs, many of which could not be handled by conventional label printers.

A short list of possible applications for the present thermal label printer would include, for example, stock administration at retail shops, office data file administration, printing of blood data cards and test tube labels at blood banks, printing of bar code labels for patient charts and medical certificates at medical clinics and hospitals, administration of manufacturing processes, parts and inventory at factories, printing of labels for confirmation of when freight is received and shipped at freight depots, administration of data and printing of labels relating to outside suppliers at department stores and supermarkets, and administration of customer data at department stores and supermarkets.

**Claims**

1. A thermal label printer (1) comprising:

   a label printer unit (2b) having a passage (18) for passing a label strip consisting of thermosensitive labels (L) detachably attached to a backing sheet (S), a supporting member (10) for supporting a roll of label strip, a thermal label position detecting means, a thermal label strip conveyance means (19), a thermal printing means (20) for thermally printing characters on the thermosensitive labels conveyed by the conveyance means, a label peeling means for peeling the labels from the backing sheet and a data input unit (2a) having a data memory means, a program memory means, an input means and a control means for controlling the aforesaid means,

   **characterized by**

   means (41-49) for electrically and mechanically connecting the label printer unit (2b) and the data input unit (2a) so as to be freely connectable with and disconnectalbe from each other, and characterised by

   a handle being adapted to be provided on one of the data input unit (2a) and the label printer unit (2b).

## Revendications

1. Imprimante à étiquettes thermiques (1) comprenant:
   une unité (2b) d'impression d'étiquettes présentant un passage (18) pour laisser passer une bande d'étiquettes composée d'étiquettes thermosensibles (I) fixées, de manière détachable, à une contre-feuille (S), un organe support (10) pour supporter un rouleau de bandes d'étiquettes, un moyen détecteur d'emplacement d'étiquette thermique, un moyen (19) de transport de bande d'étiquettes thermiques, un moyen (20) d'impression thermique pour l'impression thermique de caractères sur les étiquettes thermosensibles transportées par le moyen de transport, un moyen de détachement des étiquettes pour détacher les étiquettes de la contre-feuille et une unité (2a) d'entrée de données comportant un moyen de mémorisation de données, un moyen de mémorisation de programmes, un moyen d'entrée et un moyen de commande pour commander les moyens précités,
   caractérisée par
   des moyens (41-49) pour connecter, électriquement et mécaniquement, l'unité (2b) d'impression d'étiquettes et l'unité (2a) d'entrée de données de façon qu'elles puissent être librement connectées l'une à l'autre et déconnectées l'une de l'autre, et caractérisée par
   une poignée conçue pour être montée soit sur l'unité (2a) d'entrée de données soit sur l'unité (2b) d'impression d'étiquettes.

## Patentansprüche

1. Thermischer Etikettendrucker (1) umfassend:
   eine Etikettendruckereinheit (2b) mit einem Durchtritt (18) zum Hindurchführen eines Etikettenbandes, bestehend aus thermosensitiven Etiketten (L), welche ablöshar an einem Trägerblatt (S) befestigt sind, ein Stützglied (10) zum Abstützen eines Etiketten-Bandwickels, eine Detektoreinrichtung zum Ermitteln der Position von Thermoetiketten, eine Fördereinrichtung (19) für das Thermoetikettenband, eine thermische Druckeinrichtung (20) zum thermischen Drucken von Zeichen auf die thermosensitiven Etiketten, welche von der Fördereinrichtung herangeführt werden, eine Etiketten-Abzieheinrichtung zum Abziehen der Etiketten von dem Trägerblatt und eine Dateneingabeeinheit (2a) mit einem Daten-Memory, einem Programm-Memory sowie einer Eingabeeinrichtung und einer Steuereinrichtung **gekennzeichnet** durch
   Einrichtungen (41 - 49) zum elektrischen und mechanischen Verbinden der Etikettendruckereinheit (2b) und der Dateneingabeeinheit (2a), derart, daß diese Einheiten frei miteinander verbindbar und voneinander lösbar sind, und gekennzeichnet durch
   einen Handgriff, welcher geeignet ist, entweder an der Dateneingabeeinheit (2a) oder an der Etikettendruckereinheit (2b) vorgesehen zu sein.

*FIG. 1*

B
F ¥530
49123 87 5217

11

L

R T 2b
10
1
45
9
42
43
45
6
7
4 5
25
2a

7 8 9
4 5 6
0 1 2 3
. C M D R

13
12
8
40
48 47 46 49 3b
3a

FIG. 2

# FIG. 3

# FIG. 4

EP 0 200 945 B1

# FIG. 5

EP 0 200 945 B1